# EUROPEAN PATENT APPLICATION

(11) **EP 1 612 665 A1**
(43) Date of publication of application: **04.01.2006**
(21) Application number: 04257234.7
(22) Date of filing: 22.11.2004
(51) Int. Cl.: G06F 9/445

(54) **Method and apparatus for controlling initialization of memories**

(30) Priority: 30.06.2004 JP 2004194515
(71) Applicant: FUJITSU LIMITED, Kawasaki-shi, Kanagawa 211-8588 (JP)
(72) Inventor: Nakayama, Noriko c/o Fujitsu Limited, Kawasaki-shi Kanagawa 211-8588 (JP)
(74) Representative: Fenlon, Christine Lesley

(57) **Abstract**

A memory initialization controlling apparatus (40) reads memory control data that is control data which controls an input or output of data of each memory (21 to 28) and initializes a memory controller (20) that controls memories (21 to 28). The memory initialization controlling apparatus (40) includes a memory comparison control information storing unit (401 a) that stores memory comparison control information that is information which controls the comparison of the memory control data; an SPD data reading unit (402a) that reads the memory control data from the memories (21 to 28); and a memory initialization controlling unit (402b) that controls the comparison of the memory control data in accordance with the memory comparison control information, and initializes the memory controller (20) in accordance with the results of the comparison.

## Description

### BACKGROUND OF THE INVENTION

### 1) Field of the Invention

The present invention relates to a technology for preventing system failures due to an incorrect loading of memories when initializing the memories.

### 2) Description of the Related Art

When a computer starts up, the Serial Presence Detect data (SPD data), which is the data for controlling the memories, is read and the BIOS initializes a memory controller that controls the memories. The BIOS performs two functions: initialize the memory controller in accordance with the SPD data; and decide whether the SPD data is appropriate for controlling the memory controller. Moreover, when the computer sends data from all the memories to the memory controller at one time, the BIOS decides whether the SPD data sent from all the memories are identical or not because the memory controller cannot control the memories unless the SPD data of all the memories are identical. However, this process exerts a heavy processing load on the BIOS, and this process may cause system failures due to an incorrect loading of data in the memories (hereinafter, "incorrect loading of memories").

Conventional technologies are known that disclose methods of reducing the processing load on the BIOS when initializing the memories in order to prevent system failures due to the incorrect loading of memories. For example, Japanese Patent Application Laid-Open No. 2001-270166 discloses a prior art where a central processing unit (CPU) and a memory are connected by a dedicated bus. This configuration avoids impairing the high-speed operation of other memories and enables these other memories to operate at their original performance specification.

According to the prior art disclosed in Japanese Patent Application Laid-Open No. 2001-270166, the CPU and the memory are connected by a dedicated bus that avoids impairing the high-speed operation of other memories to enable these other memories to operate at their original performance specification. However, there was a problem that could not be solved, namely, the processing load on the BIOS to initialize the memories still remains heavy, and system failures due to the incorrect loading of memories cannot be eliminated.

### SUMMARY OF THE INVENTION

It is desirable to at least solve the problems in the conventional technology.

A memory initialization controlling apparatus according to an embodiment of an aspect of the present invention reads memory control data that controls input or output of data of a plurality of memories and initializes a memory controller that controls the plurality of memories. The memory initialization controlling apparatus includes a memory comparison control information storing unit that stores memory comparison control information which controls the comparison of the memory control data; a memory control data reading unit that reads the memory control data from the memories; and a memory initialization controlling unit that controls the comparison of memory control data according to the memory comparison control information, and initializes the memory controller in accordance with the results of the comparison.

A memory initialization control method apparatus according to an embodiment of another aspect of the present invention reads memory control data that controls input or output of data of plurality of memories, and initialize a memory controller that controls the memories. The memory initialization control method includes storing memory comparison control data that is information for comparing the memory control data; reading the memory control data from the memories; and initializing the memory controller based on the results of comparisons of the memory control data in accordance with the memory comparison control data.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a functional block diagram of a computer system according to an embodiment of the present invention;
Fig. 2 is a table of an example of memory group identification information in the memory comparison control information storing unit of Fig. 1;
Fig. 3 is a table of an example of valid memory control data in the memory comparison control information storing unit of Fig. 1;
Fig. 4 is a table of an example of memory operation identification data of the memory comparison control information storing unit of Fig. 1;
Fig. 5 is a table of an example of memory comparison commands of the memory comparison control information storing unit of Fig. 1; and
Fig. 6 is a flowchart of memory initialization control processing performed by the memory initialization controlling apparatus of Fig. 1

### DETAILED DESCRIPTION

Exemplary embodiments of a computer system that is an implementation of a memory initialization controlling apparatus according to the present invention are explained below in reference to the accompanying drawings.

The explanations are given in the order of (1) outline and main features of the memory initialization controlling apparatus, (2) configuration of a computer system, (3) an example of memory comparison control information, and (4) a procedure to control memory initialization.

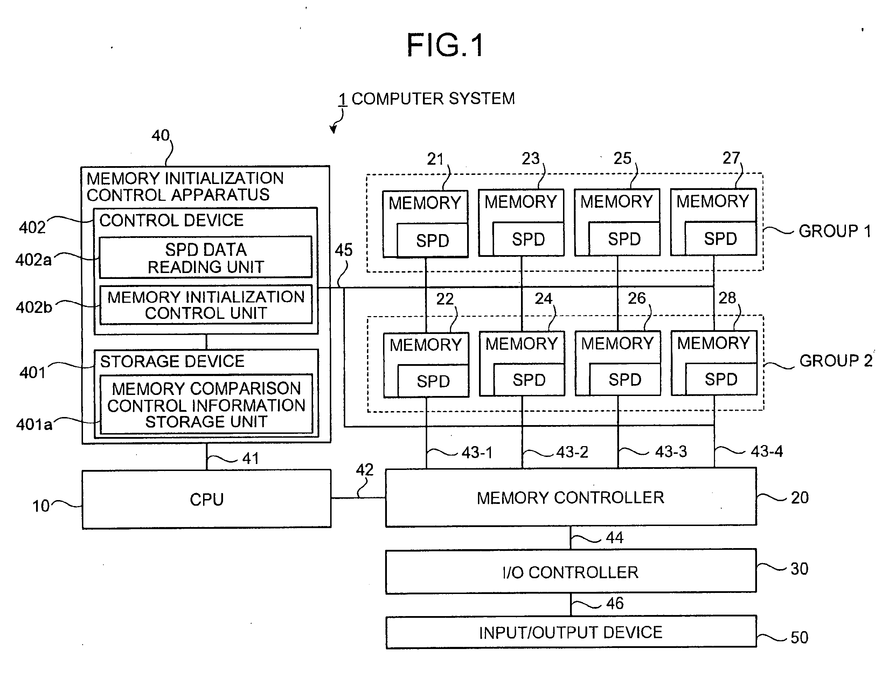

First, the outline and main features of a memory initialization controlling apparatus 40 according to an embodiment of the present invention is explained in reference to Fig. 1. Fig. 1 is a functional block diagram of a computer system 1 that includes the memory initialization controlling apparatus 40. The memory initialization controlling apparatus 40 reads SPD data that is used to control an input to and output from memories 21 to 28, and initializes a memory controller 20 that controls the memories 21 to 28. A special feature of the memory initialization controlling apparatus 40 is there is less processing load on the BIOS while the BIOS initializes the memories, which prevents system failures due to an incorrect loading of memory. The SPD data is data pertaining to operating specifications of a memory and includes maximum clock frequency of the memory, signal timing, and the like. The SPD data is 128 Bytes or more and is stored in a read only memory (ROM) provided in the memory.

The memory initialization controlling apparatus 40 includes a storage device 401 and a control device 402. The control device 402 includes an SPD data reading unit 402a and a memory initialization controlling unit 402b. The storage device 401 includes a memory comparison control information storing unit 401 a. The memory comparison control information storing unit 401 a stores memory comparison control information. The memory comparison control information is the information used to compare the SPD data of the memories 21 to 28. The SPD data reading unit 402a reads the SPD data of the memories 21 to 28. The memory initialization controlling unit 402b controls the comparison of the SPD data based on the memory comparison control information, and initializes a memory controller 20 according to the results of the comparison. This configuration makes it possible to reduce processing load on the BIOS and prevent system failure due to an incorrect loading of memories.

The computer system 1 is explained in detail with reference to Fig. 1. The computer system 1 includes a CPU 10, the memory controller 20, the memories 21 to 28, an I/O controller 30, the memory initialization controlling apparatus 40, buses 41, 42, 43-1 to 43-4, 44, 45, and 46, and an input/output device 50. The CPU 10 controls the entire computer system 1. The CPU starts the BIOS from a ROM and initializes the memories 21 to 28 and the input/output device 50. Moreover, the CPU 10, using the BIOS, rewrites the memory comparison control information of the memory initialization controlling apparatus 40. Further, the CPU 10 reads and writes data into the memories 21 to 28 via the memory controller 20.

The memory controller 20 receives commands from the CPU 10 and controls reading and writing of data into the memories 21 to 28. The memory controller 20 is configured from a bridge circuit called "north bridge". Detailed explanation of the "north bridge" is omitted here because it has no direct effect on the present invention. Also, the memory controller 20 controls memories having identical memory identification information; in other words, it simultaneously controls four memories of either group 1 or group 2.

The memories 21 to 28 are primary storage devices of the computer system 1. In concrete terms, the memories 21 to 28 are dynamic random access memories (DRAM) and the like. Moreover, the memories 21 to 28 are divided into two groups. As shown in Fig. 1, the memories 21, 23, 25, and 27 belong to the group 1, and the memories 22, 24, 26, and 28 belong to the group 2. Further, the memories 21 to 28 are removably mounted into memory slots (not shown) of the computer system 1.

The I/O controller 30 controls the input/output device 50. The I/O controller 30 is configured from bridge circuits called "north bridge" or "south bridge". Detailed explanation of the "north bridge" or the "south bridge" is omitted here because they have no direct effect on the present invention.

When the computer system 1 starts up, the CPU 10 uses the memory initialization controlling apparatus 40 in place of the BIOS to read the SPD data of the memories 21 to 28 and to initialize the memory controller 20 that controls the memories 21 to 28. A detailed explanation of the memory initialization controlling apparatus 40 is given separately.

The buses 41, 42, 43-1 to 43-4, 44, 45, and 46 transmit data at the data processing speed of the equipment to which each bus is connected. The bus 41 transmits data between the CPU 10 and the storage device 401 of the memory initialization controlling apparatus 40. The bus 42 transmits data of the memories 21 to 28 between the CPU 10 and the memory controller 20.

The buses 43-1 to 43-4 transmit data between the memory controller 20 and the memories 21 to 28. The buses 43-1 to 43-4 are parallel buses connected in parallel to the four memories of the group 1 and the four memories of the group 2, and can transmit the data of the four memories of any of the two groups simultaneously. The bus 44 transmits data between the memory controller 20 and the I/O controller 30. The bus 46 transmits data between the I/O controller 30 and the input/output device 50. The bus 46 can be a PCI bus, an USB bus, and the like depending on the specifications of the input/output device 50.

The input/output device 50 includes an external storage device. The external storage device may be a read-only memory (ROM), a hard disk drive (HDD), or similar storage device. Although not shown, the input/output device 50 has an image display device; a keyboard; a mouse; and the like. System software, such as the BIOS, is stored in the external storage device.

The storage device 401 is a non-volatile memory, such an electrically erasable and programmable read only memory (EEPROM). The memory comparison control information storing unit 401 a stores memory comparison control information. A detailed explanation of memory comparison control information is given later.

The control device 402 controls the entire memory initialization controlling apparatus 40. The control device 402 has the SPD data reading unit 402a and the memory initialization controlling unit 402b. The SPD data reading unit 402a reads the SPD data from the memories 21 to 28. Since the SPD data reading unit 402a reads the SPD data of all the memories simultaneously, lesser time is required to read the SPD data. As a result, processing load on the BIOS to initialize the memories 21 to 28 is reduced.

The memory initialization controlling unit 402b compares the SPD data based on the memory comparison control information, and initializes the memory controller 20 based on the results of the comparisons. The memory initialization controlling unit 402b may be configured so as to select the memory comparison control commands. For example, the memory initialization controlling unit 402b may be configured so as to conduct a one-to-one comparison of the SPD data and the valid memory control data. On the other hand, the memory initialization controlling unit 402b may be configured so as to narrow down the comparisons to specific items.

The memory initialization controlling unit 402b controls the comparison of SPD data in accordance with the memory comparison control commands. If all of the memories 21 to 28 have identical SPD data, then the memory initialization controlling unit 402b initializes the memory controller 20. On the other hand, if all of the memories 21 to 28 do not have identical SPD data, the memory initialization controlling unit 402b does not initialize the memory controller 20.

Further, if even one of the memories 21 to 28 has valid memory control data, the memory initialization controlling unit 402b initializes the memory controller 20 using the valid memory control data and an address of the memory that contains the valid memory control data. But if none of the memories 21 to 28 has valid memory control data, the memory initialization controlling unit 402b does not initialize the memory controller 20.

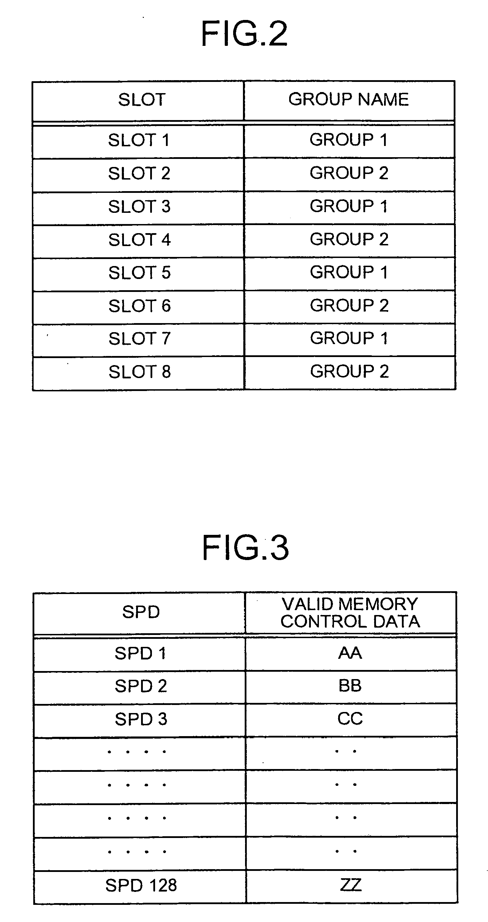

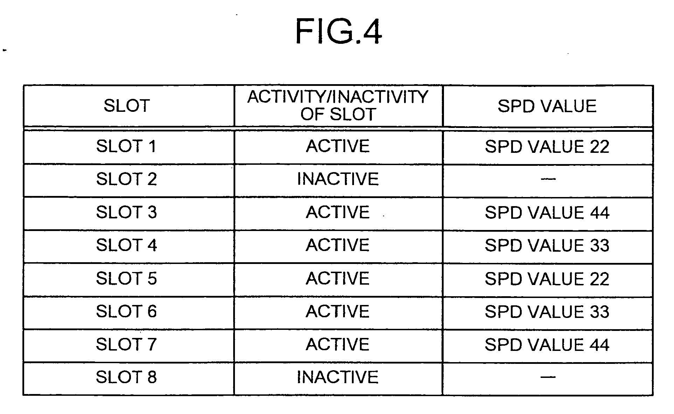

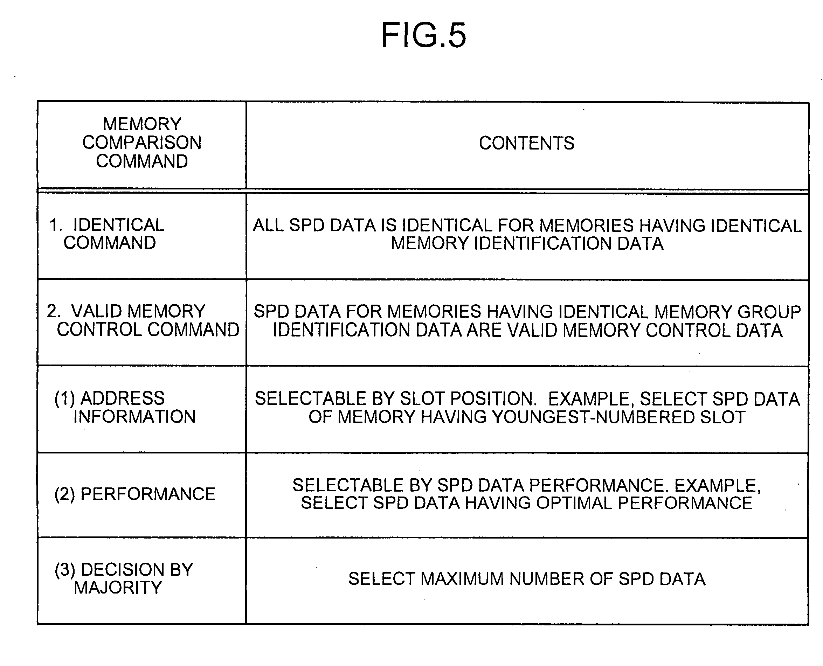

An example of the memory comparison control information is explained with reference to Figs. 2 to 5. The memory comparison control information includes memory group identification information, valid memory control data, memory operation identification information, and memory comparison control commands. Fig. 2 is an example of memory group identification information. Fig. 3 is an example of valid memory control data. Fig. 4 is an example of memory operation identification information. Fig. 5 is an example of memory comparison control commands.

The memory group identification information shown in Fig. 2 identifies the scope of the memories that can read the SPD data at one time. In concrete terms, the memory group identification information includes a name of a group to which the memories of Fig. 1 belong; namely, the group 1 or the group 2, and a name of a slot into which the corresponding memory is installed, namely, 1 to 8.

The valid memory control data is stored in an EEPROM having a capacity of 128 Bytes, and is the SPD data that can be controlled by the memory controller 20. In concrete terms, as shown in Fig. 3, the valid memory control data "AA" to "ZZ" are stored as 128 Bytes of SPD 1 to SPD 128.

The memory operation identification information is information that indicates which memories are active and which are inactive. In concrete terms, as shown in Fig. 4, the memory operation identification information includes information that indicates whether each of the slots 1 to 8 are "active" or "inactive" and includes an SPD value if the memory slot is "active".

Fig. 5 is a list of each memory comparison command and the contents of each command. There are two types of memory comparison commands: (1) an identical command that demands memories having identical memory group identification information, that is, memories belonging to an identical group, to have identical SPD data; and (2) a valid memory control command that demands memories having identical memory group identification information, that is, memories belonging to identical group, to have valid memory control data.

Moreover, the memory comparison control command demands the selection of either: (1) the memories having valid memory control data; or (2) memories having valid memory control data that is based on either address information, performance, or decision by majority of SPD data. In other words, the memory comparison control command selects the valid memory control data which matches the memory having the youngest-numbered slot within a group, selects the SPD data having optimal performance, or selects the maximum number of SPD data within the group.

The SPD data of the memories in the group 1 are, for example, SPD data that are controllable by the memory controller 20. As shown in Fig. 4, the memories in the slots 1 and 5 have SPD value 22, and the memories in the slots 3 and 7 have SPD value 44. When the memory comparison control command demands, for example, the address information of a memory to match the SPD data of the memory in the youngest-numbered slot within its group, then the memories in the slots 1 and 5 become active and the memories 3 and 7 become inactive. On the other hand, the memories in the slots 2 and 8 of the group 2 become inactive, because, these memories have SPD data which are not controllable by the memory controller 20.

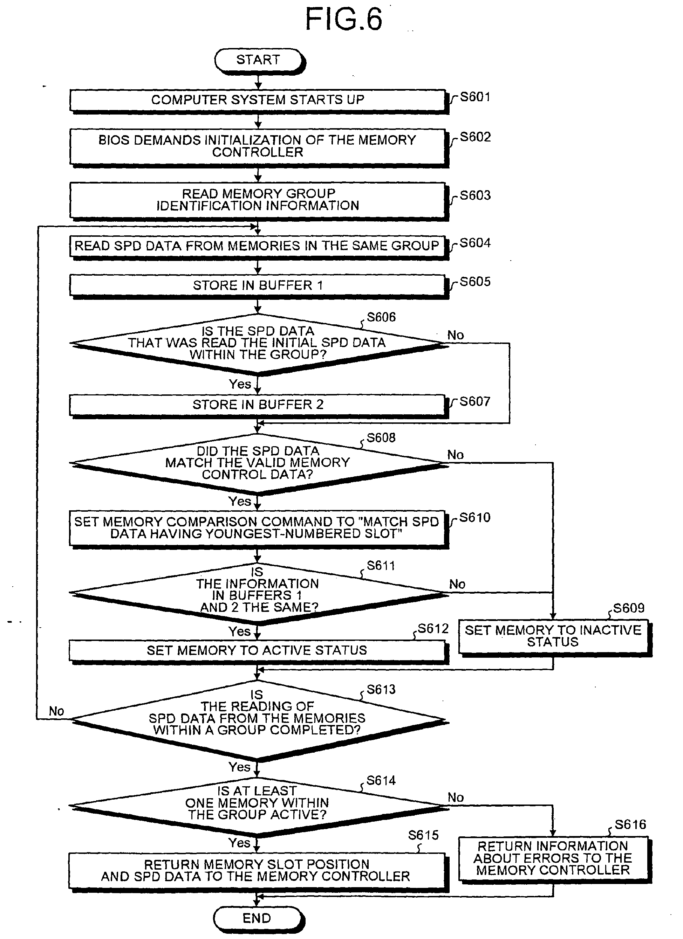

Fig. 6 is a flowchart of the memory initialization control procedure performed by the memory initialization controlling apparatus 40. To begin with, the computer system 1 starts up (step S601).

Subsequently, the BIOS, which is loaded in the CPU 10, commands the memory initialization controlling apparatus 40 to read the SPD data from the memories 21 to 28, and commands the memory controller 20 to initialize (step S602). Then, the memory initialization controlling unit 402b reads the memory group identification information, or in other words, the group name of the memories from the memory comparison control information storing unit 401 a (step S603). The SPD data reading unit 402a reads SPD data from memories having the same group name (step S604), and stores this SPD data in a buffer 1 of the memory initialization controlling unit 402b (step S605). If the BIOS issues a command to read the "XX address" of the SPD data of a memory, the memory initialization controlling unit 402b will automatically command the SPD data reading unit 402a to read the SPD data of the memories 21 to 28 based on the memory comparison control information.

Then, the memory initialization controlling unit 402b decides whether the read SPD data is the initial SPD data within the group (step S606). If the SPD data is the initial SPD data (step S606: yes), the memory initialization controlling unit 402b stores the read SPD data in a buffer 2 of the memory initialization controlling unit 402b (step S607). On the other hand, if the read SPD data is not the initial SPD data (step S606: no), the memory initialization controlling unit 402b proceeds to step S608.

The memory initialization control unit 402b will then decide whether the read SPD data matches the valid memory control data (step S608). If the SPD data does not match the valid memory control data of the memory comparison control information (step S608: no), the memory initialization control unit 402b will set the memory operation identification information of the memory of the memory comparison control information to inactive status (step S609) and the system control proceeds to step S613.

On the other hand, if the read SPD data matches the valid memory control data of the memory comparison control information (step S608: yes), then the memory initialization controlling unit 402b sets the memory comparison command to "match SPD data youngest-numbered slot" (step S610). Then, the memory initialization controlling unit 402b determines whether the SPD data of the buffers 1 and 2 are the same (step S611). If the SPD data of the buffers 1 and 2 are not the same (step S611: no), the memory initialization controlling unit 402b sets the memory operation identification information of the memory of the memory comparison control information to inactive status (step S609), and the system control proceeds to step 613.

On the other hand, if the SPD data in the buffers 1 and 2 are the same (step S611: yes), the memory initialization controlling unit 402b sets the memory operation identification information of the memory comparison control information of the memory shown in Fig. 4 to active status (step S612). Then, the memory initialization controlling unit 402b decides whether the reading of SPD data from memories within a group has been completed (step S613). If the reading of SPD data from the memories within a group has not been completed (step S613: no), the system control returns to step S604.

On the other hand, if the reading of SPD data from the memories within a group has been completed (step S613:yes), the memory initialization controlling unit 402b further determines whether there is at least one memory within the group that is in active status (step S614). If at least one memory is in active status (step S614: yes), the memory initialization controlling unit 402b returns memory slot position and the SPD data to the memory controller 20 (step S615). But if all the memories within a group are in inactive status (step S614: no), the memory initialization controlling unit 402b returns information about the errors to the memory controller 20 (step S616).

The memory initialization controlling apparatus 40 performs the same initialization control procedures as above on the memories of the remaining group, reads the SPD data of the memories 21 to 28, and initializes the memory controller 20. In this way, the SPD data of all the memories 21 to 28 is compared in accordance with the memory comparison control information, and the memory controller 20 is initialized according to the results of these comparisons. In this manner, in the memory initialization controlling apparatus 40, the processing load on the BIOS to initialize the memories can be reduced and it becomes possible to prevent system failures due to the incorrect loading of memories.

As described above, the memory comparison control information storing unit 401 a stores the memory comparison control information that controls the comparison of memory control data; the SPD data reading unit 402a reads memory control data from the memories 21 to 28; the memory initialization controlling unit 402b controls the comparison of the memory control data based on the memory comparison control information, and initializes the memory controller 20 based on the results of the comparison. As a result, in the memory initialization controlling apparatus 40, the processing load on the BIOS to initialize the memories can be reduced and it becomes possible to prevent system failures due to the incorrect loading of memories.

Moreover, the memory comparison control information storing unit 401 a stores memory comparison control information including the memory group identification information that identifies the scope of the memories 21 to 28 that can read memory control data at one time; valid memory control data that is the memory control data that can control the memory controller 20; memory operation identification information that identifies the active status or inactive status of the memories 21 to 28; and memory comparison control commands that control the comparison of memory control data. As a result, in the memory initialization controlling apparatus 40, it becomes possible to make the system loading conditions clear, and expands the freedom to select memories.

Furthermore, the memory comparison control command demands that all of the memories 21 to 28 having identical memory group identification information to have identical memory control data. The memory initialization controlling unit 402b controls the comparison of the memory control data in accordance with the memory comparison control command. If all of the memories 21to 28 have identical memory control data, the memory controller 20 is initialized using the memory control data. If all of the memories 21 to 28 do not have identical memory control data, the memory controller 20 is not initialized. As a result, in the memory initialization controlling apparatus 40, it becomes possible to invalidate memories which do not comply with the system loading conditions, and prevent a failure of the system to start up due to the incorrect loading of memory.

Moreover, the memory comparison control command demands that a plurality of the memories 21 to 28 having identical memory group identification information have valid memory control data. The memory initialization controlling unit 402b controls the comparison of memory control data in accordance with the memory comparison command. If at least one of the memories 21 to 28 has valid memory control data, the memory controller 20 initializes using the valid memory control data and the address information of the memory having valid memory data. If none of the memories 21 to 28 have valid memory control data, the memory controller 20 does not initialize. As a result, in the memory initialization controlling apparatus 40, it becomes possible to invalidate memories that do not comply with the system loading conditions, and prevent failure of the system to start up due to the incorrect loading of memory.

Since the memory comparison command demands the selection of the valid memory control data and the memories 21 to 28 having valid memory control data according to the address information of the memories 21 to 28. As a result, in the memory initialization controlling apparatus 40, it becomes possible to easily select memories that are within the scope of the system loading conditions.

An embodiment of the present invention has been explained up to this point. It is also acceptable to implement the present invention in various other embodiments that fall within the scope of the technical concepts of the claims.

In the present embodiment, for example, the memory comparison control command was explained as "select SPD data of memory having youngest-numbered slot". But the memory comparison control command is not limited to this explanation, and it is possible to apply other memory comparison control commands such as "select SPD data having optimal performance" or "select maximum number of SPD data".

As explained above, according to the present invention it is possible to prevent system failures due to an incorrect loading of memory by reducing the processing load on the BIOS for initializing the memories. Moreover, it is possible to make system loading conditions clear and expanding the freedom to select the memories. Furthermore, it is possible to place a memory into inactive status when the memory does not suit the loading conditions of the system, which prevents failure of a system to start up due to an incorrect loading of memory. In addition, it is possible to increase the freedom to select memories from within the scope of the system loading conditions.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A memory initialization controlling apparatus, which reads memory control data that controls input or output of data of a plurality of memories and initializes a memory controller that controls the plurality of memories, comprising:
a memory comparison control information storing unit that stores memory comparison control information which controls the comparison of the memory control data;
a memory control data reading unit that reads the memory control data from the memories; and
a memory initialization controlling unit that controls the comparison of memory control data according to the memory comparison control information, and initializes the memory controller in accordance with the results of the comparison.

2. The memory initialization controlling apparatus according to claim 1, wherein the memory comparison control information storing unit stores memory group identification information that identifies the scope of the group of memories that can read memory control data at one time; valid memory control data that can control the memory controller; memory operation identification information that distinguishes whether a memory is in an active status or an inactive status; and memory comparison control command that demands a comparison of the memory control data.

3. The memory initialization controlling apparatus according to claim 1, wherein the memory control data reading unit reads the memory control data from all the memories at one time.

4. The memory initialization controlling apparatus according to claim 2, wherein the memory initialization controlling unit sets a memory comparison control command by selecting an appropriate memory comparison control command from among a plurality of memory comparison control commands.

5. The memory initialization controlling apparatus according to claim 2, wherein the memory comparison control command
demands all of the memories having identical memory group identification information to also have identical memory control data;
compares the memory control data in accordance with the memory comparison control command;
initializes the memory controller based on memory control data if all the memories have identical memory control data; and
does not initialize the memory controller if all the memories do not have identical memory control data.

6. The memory initialization controlling apparatus according to claim 2, wherein the memory comparison control command
demands the memories having identical memory group identification information to also have valid memory control data;
controls the comparison of memory control data in accordance with the memory comparison control command;
initializes the memory controller based on the valid memory control data and address information of the memory having applicable valid memory control data if even one of the memories has the valid memory control data; and
does not initialize the memory controller if none of the memories has the valid memory control data.

7. The memory initialization controlling apparatus according to claim 4, wherein the memory comparison control command selects a memory having valid memory control data of any one of either address information, performance data, or majority information decision from the memories and applicable valid memory control data.

8. A memory initialization control method for reading memory control data that controls input or output of data of plurality of memories, and initialize a memory controller that controls the memories, comprising:
storing memory comparison control data that is information for comparing the memory control data;
reading the memory control data from the memories; and
initializing the memory controller based on the results of comparisons of the memory control data in accordance with the memory comparison control data.
